# EUROPÄISCHE PATENTSCHRIFT

(11) **EP 0 490 058 B1**
(45) Veröffentlichungstag und Bekanntmachung des Hinweises auf die Patenterteilung: **22.06.1994**
(21) Anmeldenummer: 91117698.0
(22) Anmeldetag: 17.10.1991
(51) Int. Cl.: B29C 47/64, B29C 47/66

(54) **Hochleistungsextruder**
Extruder with a high capacity
Extrudeuse à haut rendement

(30) Priorität: 14.12.1990 DE 4039942
(43) Veröffentlichungstag der Anmeldung: 17.06.1992
(73) Patentinhaber: HERMANN BERSTORFF Maschinenbau GmbH, D-30627 Hannover (Kleefeld) (DE)
(72) Erfinder: Capelle, Gerd, Dipl.-Ing., W-3212 Langenhagen 6 (DE); Meier, Günther, W-3000 Hannover (DE)

(56) Entgegenhaltungen:
- EP-A- 0 219 334
- EP-A- 0 336 702
- DE-B- 1 142 839
- FR-A- 2 358 191
- GB-A- 2 068 249
- US-A- 4 178 104
- PATENT ABSTRACTS OF JAPAN vol. 7, no. 187 (M-236)(1332) 16. August 1983 & JP-A-58 089 341 (TOSHIBA KIKAI K.K.) 27. Mai 1983

## Beschreibung

Die Erfindung betrifft einen Extruder zur Verarbeitung und Herstellung von Kautschuk und thermoplastischen Kunststoffen gemäß dem Oberbegriff des Anspruchs 1.

Im Bereich der Extrudertechnologie ist es seit langem bekannt, einen Extruder derart auszubilden, daß in Mischabschnitten durch sein Gehäuse Metallstifte in den Verarbeitungsraum für das Extrudat hineinragen. Zudem sind die Stege der Extruderschnecke an den Stellen unterbrochen, an denen die Stifte in das Extrudergehäuse hineinragen. Derartige Extruder sind beispielsweise durch die DE-A-22 35 784 oder die DE-A-30 03 615 der Anmelderin bekannt.

Aus der JP-A-58-89341 ist ein Extruder mit Stiften bekannt, die in einem Zylinder ragen. Dem Stiftzylinderteil ist ein auf der Extruderschnecke angeordnetes Mischteil nachgeordnet, welches Schneckenstege mit einer größeren Steigung als das Stiftteil aufweist.

Diese Extruder zeichnen sich durch eine sehr gute Misch- und Homogenisierwirkung auf das zu verarbeitende Material aus und ermöglichen außerdem bei gleichbleibender Schneckendrehzahl einen vergrößerten Materialdurchsatz pro Zeiteinheit durch den Extruder. Diese Vorzüge haben dazu geführt, daß Stiftzylinderextruder in den letzten 15 Jahren (nicht zuletzt durch ständige Verbesserung) zu den am häufigsten eingesetzten Misch- und Homogenisierungsextrudern wurden.

Unabhängig davon wurde ein Mischteil für einen Extruder entwickelt, das als Transfermix-Mischteil bekannt geworden ist (DE-A-11 42 839). Dieses Mischteil ist im wesentlichen dadurch gekennzeichnet, daß sowohl die Extruderschnecke als auch die Innenwand des Extrudergehäuses über eine bestimmte Länge mit Nuten und Stegen versehen ist, wobei in Längsrichtung des Extrudergehäuses die Gangtiefe der Extruderschnecke in dem gleichen Maß bis auf Null abnimmt und anschließend wieder anwächst, wie die Gangtiefe der Gehäusenuten zunimmt bzw. wieder abnimmt. Durch diese Ausbildung von Extruderschnecke und -gehäuse wird ein bei rotierendem Mischteil vollständiger Extrudattransport von den Schneckennuten in die Gehäusenuten möglich, was eine gute Mischwirkung auf das Extrudat hat.

Aus der EP-A-0 336 702 ist ebenfalls eine Extruder mit einem Transfermix-Mischteil bekannt. Im Einzugsbereich weist dieser Extruder Schneckenstege auf, die zahnförmig ausgebildet sind.

Der Transfermix-Extruder konnte gegenüber dem Stiftzylinderextruder einen gewissen Marktanteil für sich beanspruchen, insbesondere dann, wenn die Baulänge des Extruders klein gehalten werden sollte. Nachteilig an dieser Mischteilkonstruktion ist aber der vergleichsweise hohe Fertigungsaufwand.

Da sich die Technologie der Extrudermischteile, abgesehen von Detailverbesserungen, in den letzten 15 bis 20 Jahren nicht verändert hat, lag der Erfindung die Aufgabe zugrunde, ausgehend von bekannten Vorrichtungen, eine neue Extrudergeneration mit verringerter Antriebsleistung einen erhöhten Massedurchsatz bei gleichzeitiger Reduzierung des Antriebsdrehmomentes zu schaffen. Auch soll der Extruder mit einer verringerten Bauteillänge seines Mischbereiches auskommen.

Diese Aufgabe wird nach der Erfindung durch einen Extruder gemäß Anspruch 1 gelöst.

Weiterbildungen der Erfindung sind den Ansprüchen 1 bis 5 zu entnehmen.

Durch die Kombination der beiden bekannten Mischteil(basis)technologien konnte ein Extruder mit den Merkmalen des Hauptanspruchs geschaffen werden, der gegenüber den Misch- und Homogenisierungsextrudern nach dem Stand der Technik über erhebliche Vorteile verfügt.

So konnte mit einem, über einen Stiftzylinderbereich und einen Transfermixbereich verfügenden Laborextruder festgestellt werden, daß bei gleicher Mischqualität und gleicher Schneckendrehzahl die Antriebsleistung des Extruders um 50 % verringert und der Massedurchsatz um 60 % bis 100 % erhöht werden konnte.

Diese ausgezeichneten Ergebnisse bewirken ferner eine 50 %ige Reduzierung des Antriebsdrehmomentes, was zu einer starken Verminderung der Getriebekosten führt. Zudem läßt sich durch die erfindungsgemäße Kombination des Stiftzylindermischteils und des Transfermixmischteils die für die gleiche Mischqualität notwendige Bauteillänge des Mischbereiches um ca. 50 % gegenüber einem Extruder verringern, der nur nach dem Stiftzylinderprinzip arbeitet.

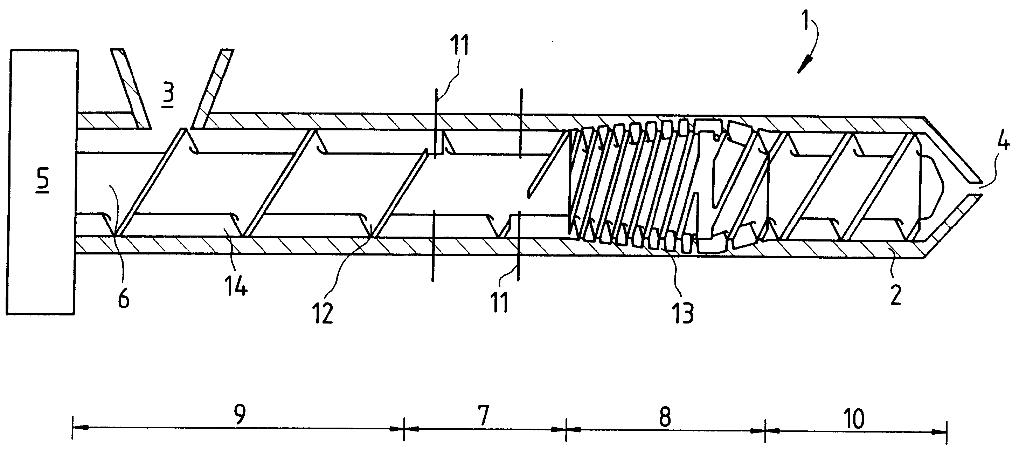

Die Erfindung läßt sich anhand eines Ausführungsbeispiels mit Hilfe der Zeichnung erläutern. Sie zeigt in schematischer Darstellung einen längsseitig aufgeschnittenen Einschneckenextruder 1.

Innerhalb des Extrudergehäuses 2 ist eine Extruderschnecke 6 angeordnet, die von einer Antriebseinheit 5 um ihre Längsachse antreibbar ist. Das Gehäuse 2 hat im Bereich seines stromabwärtigen Endes eine Einfüllöffnung 3 für das zu extrudierende Material, welches den Extruder fertig gemischt durch die Auslaßöffnung 4 verläßt.

Die Extruderschnecke 6 weist im Einzugsbereich 9 eine Schneckengeometrie auf, die dazu geeignet ist, in an sich bekannter Weise das durch die Einfüllöffnung 3 zugeführte Material in den Extruder einzuziehen und zu plastifizieren.

Stromabwärts dieses Einzugsbereiches 9 ist ein Stiftzylinderbereich 7 vorgesehen, in dem zwei Reihen von Stiften 11 radial durch das Extrudergehäuse 2 in Richtung Schneckenachse in den Verarbeitungsraum 14 des Extruders hineinragen. In diesem Bereich 7 sind die Schneckenstege 12 in bekannter Weise in der Stiftebene durchbrochen, um ein Kollidieren mit den Stiften 11 zu vermeiden.

Stromab des Stiftzylinderbereiches 7 ist ein Transfermixbereich 8 angeordnet.

Das letzte Verfahrensteil der Extruderschnecke 6 wird durch den Druckerhöhungsbereich 10 gebildet, in dem die Schneckengeometrie so gewählt ist, daß in bekannter Weise der Schmelzedruck auf den notwendigen Werkzeugdruck anhebbar ist.

Neben diesem Ausführungsbeispiel sind auch andere Realisierungsmög- lichkeiten für diesen Hochleistungsextruder denkbar. So könnte beispielsweise der Transfermixbereich 8 auch stromaufwärts vom Stiftzylinderbereich 7 angeordnet sein, wenngleich die oben vorgestellte Variante die besseren Misch- und Homogenisierungsresultate erbringt. Außerdem sei hier angemerkt, daß der Stiftzylinderbereich auch mit mehr als zwei Stiftreihen seine Misch- und Homogenisierungsaufgabe erfüllt. In Bezug auf das Kosten-Mischungsgüte-Verhältnis ist der Stiftzylinderbereich am günstigsten mit ein bis fünf Stiftreihen auszustatten.

Die bevorzugte Länge der einzelnen Extruderbereiche beträgt bei einer Extruderlänge von 10 Schneckendurchmessern D etwa 3 D für den Einzugsbereich, 1,5 bis 2 D für den Stiftzylinderbereich, 2 bis 2,5 D für den Transfermixbereich und ca. 3 D für den Druckaufbaubereich.

Unabhängig von diesen Angaben können aber auch noch je nach Bedarf zusätzliche Verfahrensbereiche vor, nach oder zwischen den Stiftzylinder- und Transfermixbereichen angeordnet werden, so z.B. Entgasungs- oder Knetbereiche.

## Patentansprüche

1. Extruder zur Verarbeitung und Herstellung von Kautschuk und thermoplastischen Kunststoffen, bestehend aus einem Extruderhäuse (2) mit einer Einlaß- und einer Auslaßöffnung (3, 4), einem Antrieb (5) für eine in dem Gehäuse (2) um ihre Länsachse drehbar angeordnete Extruderschnecke (6),
**dadurch gekennzeichnet,**
daß der Extruder (1) über zwei hintereinender angeordnete Misch- und Homogenisierbereiche (7, 8) verfügt, von denen der Bereich (7) als Stiftzylinderbereich und der andere als Transfermixbereich (8) ausgebildet ist.

2. Extruder gemäß Anspruch 1,
**dadurch gekennzeichnet**,
daß der Stiftzylinderbereich (7) stromaufwärts vor dem Transfermixbereich (8) angeordnet ist.

3. Extruder gemäß Anspruch 1,
**dadurch gekennzeichnet**,
daß der Extruder stromauf der Misch- und Homogenisierungsbereiche (7, 8) über einen Einzugsbereich (9) und stromab über einen Bereich (10) verfügt, in dem das Extrudat auf den notwendigen Werkzeugdruck extrudierbar ist.

4. Extruder gemäß Anspruch 3,
**dadurch** **gekennzeichnet,**
daß bei einer vorzugsweisen Extruderlänge von 10 Schnekkendurchmessern D der Einzugsbereich (9) 3 D, der Stiftzylinderbereich (7) 1,5 bis 2 D, der Trarsfermixbereich (8) 2 bis 2,5 D und der Druckerhöhungsbereich (10) etwa 3 D lang ist.

5. Extruder gemäß den Ansprüchen 1 bis 4,
**dadurch** **gekennzeichnet,**
daß im Stiftzylinderbereich (7) ein bis fünf Reihen Stifte (11) angeordnet sind, die in den Verarbeitungsraum des Extrudergehäuses (2) radial hineinragen, wobei an diesen Stellen die Schneckenstege (12) unterbrochen sind.

## Claims

1. An extruder for processing and producing rubber and thermoplastics, comprising an extruder housing (2) with one inlet and one outlet opening (3, 4), a drive unit (5) for an extruder screw (6) which is arranged in the housing (2) and can be rotated about its longitudinal axis,
**characterized in that**
the extruder (1) is provided with two mixing and homogenizing sections (7, 8) which are arranged one behind the other, section 7 being designed as pin barrel section while the other section is designed as Transfermix section (8).

2. An extruder as recited in claim 1,
**characterized in** **that**
the pin barrel section (7) is arranged upstream of the Transfermix section (8).

3. An extruder as recited in claim 1,
**characterized in that**
the extruder is provided upstream of the mixing and homogenizing sections (7, 8) with an intake section (9), while it comprises downstream of the said sections a section (10) in which the material pressure can be increased to the required extrusion tool pressure.

4. An extruder as recited in claim 3,
**characterized in that**
at a preferred extruder length of 10 screw diameters D, the intake section (9) presents a length of 3 D, the pin barrel section (7) a length of 1.5 to 2 D, the Transfermix section (8) a length of 2 to 2.5 D, and the pressure build-up section (10) a length of approximately 3 D.

5. An extruder as recited in claims 1 to 4,
**characterized in** **that**
the pin barrel section (7) is provided with one to five rows of pins (11) that radially project into the processing chamber of the extruder housing (2), with the screw flights (12) being interrupted at these points.

## Revendications

1. Extrudeuse pour la transformation et production de caoutchouc et de matières thermoplastiques, comprenant un carter d'extrudeuse (2) avec une ouverture d'entrée et une ouverture de sortie (3, 4), un entraînement (5) pour une vis d'extrudeuse (6) qui peut être tournée autour de son axe longitudinal dans le carter (2),
**caractérisée en ce que**
l'extrudeuse (1) comprend deux zones de mélangeage et homogénéisation (7, 8) arrangées l'une derrière l'autre, dont la zone (7) est la zone de cylindre à picots et l'autre la zone Transfermix (8).

2. Extrudeuse selon revendication 1,
**caractérisée** **en** **ce** **que**
la zone de cylindre à picots (7) est arrangée en amont de la zone Transfermix (8).

3. Extrudeuse selon revendication 1,
**caractérisée en ce que**
l'extrudeuse est pourvue en amont des zones de mélangeage et d'homogénéisation (7, 8) d'une zone d'alimentation (9) et en aval d'une zone (10) servant à effectuer la montée à la pression d'outil nécessaire de la matière à extruder.

4. Extrudeuse selon revendication 3,
**caractérisée en ce que**
dans le cas d'une longueur d'extrudeuse préférée de 10 diamètres de vis D, la longueur de la zone d'alimentation (3) est de 3 D, celle de la zone de cylindre à picots (7) de 1,5 à 2 D, celle de la zone Transfermix (8) de 2 à 2,5 D et celle de la zone de montée en pression (10) d'environ 3 D.

5. Extrudeuse selon les revendications 1 à 4,
**caractérisée en ce que**
la zone de cylindre à picots (7) comprend une à cinq rangées de picots (11) qui pénètrent radialement dans la chambre de transformation du carter de l'extrudeuse (2), les filets de vis (12) étant interrompus à ces points.
